# EUROPÄISCHE PATENTANMELDUNG

(11) **EP 4 822 289 A1**
(43) Veröffentlichungstag der Anmeldung: **14.10.2026**
(21) Anmeldenummer: 26025009.7
(22) Anmeldetag: 13.04.2026
(51) Int. Cl.: G01B 11/06, G10C 9/00

(54) **MESSVORRICHTUNG ZUR KONTAKTLOSEN HÖHEN- UND LÄNGENVERMESSUNG AN TASTENINSTRUMENTEN**

(30) Priorität: 11.04.2025 DE 202025000884 U
(71) Anmelder: Schmidt, Tobias, 17279 Lychen (DE)
(72) Erfinder: Schmidt, Tobias, 17279 Lychen (DE)

(57) **Zusammenfassung**

Digitales Messsystem für die Erfassung von Höhen, Längen, Abständen und Regulierungsparameter direkt am Klavier oder Flügel - präzise, schnell, kontaktlos und reproduzierbar.

Das Gerät wird entlang einer Führungsschiene verfahren, auf deren Oberfläche ein inkrementell codiertes Magnetband aufgeklebt ist. Ein Linear-Encoder tastet dieses Band ab und misst die exakte horizontale Position. Ein Laserdistanzsensor misst berührungslos vertikale Abstände.

**Hauptfunktionen:**

**Key Level**

Tastenhöhen/Tastentiefgang - Vermessung zur präzisen Einstellung der Klaviatur

Die schwarzen Tasten können vermessen werden, nachdem das Gerät um 180° gedreht auf die Führungsschiene aufgesetzt wird. Dies ermöglichen die symmetrische Konstruktion und Positionierung des Sensors. Eine Neupositionierung der Führungsschiene ist daher nicht erforderlich.

**Action Adjust**

Lasergestützte Regulierung der eingebauten Flügelmechanik: Parameter wie Auslösung, Abnicken, Steigung und Fang werden exakt gemessen.

**String Level**

Bestimmung der relativen Höhe einzelner Saiten gegenüber einer Referenzlinie

**Scale Design (Mensurvermessung)**

Zwei Geräte kommunizieren per WLAN miteinander. Sie tauschen ihre Positionsdaten aus und ermitteln so den Abstand entlang der Führungsschiene. Dadurch wird die klingende Länge oder Anhanglänge einer Saite berechnet.

**Steuerung:**

Die gesamte Steuerung erfolgt über eine IR-Fernbedienung mit Navigationstasten und Menüführung. Tasten am Gerät sind nicht vorhanden.

**Datenausgabe / Weiterverarbeitung:**

Die Messdaten werden auf dem Gerätedisplay angezeigt und ggf. gleichzeitig per WLAN an eine Excel-Anwendung übertragen. Ein VBA-Makro nimmt die Live-Messdaten entgegen und zeigt sie sofort grafisch in einem Diagramm an. Alternativ kann der gesamte Datensatz nach dem Messvorgang aller Messpunkte innerhalb von Sekunden übertragen werden.

Insbesondere die Mensurdaten können in einer weiteren Anwendung zur Optimierung von beispielsweise Saitendurchmessern/Saitenmaterial bei Neubesaitungen verwendet werden.

## Beschreibung

### Technisches Gebiet:

Die Erfindung betrifft eine Messvorrichtung zur präzisen Vermessung mechanischer und geometrischer Parameter an akustischen Tasteninstrumenten, insbesondere Klavieren und Flügeln. Die Vorrichtung dient der kontaktlosen Bestimmung von vertikalen und horizontalen Maßen im Bereich der Klaviatur, Mechanik, Saitenanlage und Mensur.

### Stand der Technik:

Die Vermessung der Tastenhöhen / Tastentiefgang, Regulierungs-Parameter (Auslösung, Abnicken, Fang, Steighöhe), Saitenlängen und Stegdruck erfolgt im traditionellen Klavierbau zumeist manuell mit Hilfe von Richtscheiten, Abstandslehren und Sichtkontrolle. Einzelne industrielle Systeme (z. B. in der Serienfertigung bei Yamaha) nutzen Lasermessung, sind jedoch kostenintensiv und auf Großserienanlagen beschränkt. Tragbare, flexibel einsetzbare Systeme für Handwerksbetriebe existieren nicht.

### Darstellung der Erfindung:

Die Erfindung basiert auf der Kombination eines hochauflösenden Laserdistanzsensors mit einem linearen Positionsgeber, um kontaktlos Höhen und Längen entlang einer Klaviatur, Klavier-und Flügelmechanik oder Mensur (Saitenlängen / Stegdruck) zu bestimmen. Die Vorrichtung ist tragbar und so konzipiert, dass sie auf einer geführten Schiene entlang der Klaviatur, Mechanik oder Saite verschoben werden kann. Ein inkrementell codiertes Magnetband, das auf die Schiene aufgebracht ist, wird mit einem Sensor ausgelesen, um die exakte Position jeder Messung zu erfassen. Der Lasersensor misst den vertikalen Abstand zur Referenzfläche (z. B. Taste, Hammerkopf, Saite).

Die Steuerung der Messvorrichtung erfolgt ausschließlich über eine Infrarot-Fernbedienung, wodurch mechanische Tasten entfallen und Messfehler durch Erschütterung vermieden werden. Die Anzeige erfolgt über ein integriertes Farbdisplay.

Gemessene Daten werden über eine WLAN-Verbindung direkt an ein verbundenes Endgerät übertragen (z. B. PC mit Excel-Auswertung via VBA-Makro). Die Energieversorgung erfolgt über eine 9V-Stromquelle (Block-Batterie / LiOnen-Akku).

### Ausführungsform:

Die Vorrichtung besteht aus einem aus Kunststoff gefertigten Gehäuse mit integriertem ESP32-S3-Zero Mikrocontroller, TFT-Farbdisplay, Laserdistanzsensor (z. B. Panasonic HG-C1050 / HG_C1100), Magnetbandsensor, WLAN-Modul und IR-Empfänger. Sie ist auf einer stabilen Aluminium-Führungsschiene beweglich gelagert. Durch das aufgeklebte Magnetband auf der Schiene kann die Längenposition exakt ausgelesen werden.

Der Lasersensor ist sowohl in vertikaler als auch horizontaler Richtung mechanisch justierbar gelagert. Die vertikale Einstellung erfolgt über einen mit Neodym-Magneten gehaltenen Arm, die horizontale Positionierung über eine verschiebbare Einheit, um verschiedenen Tasten- und Mechanikgeometrien gerecht zu werden. Nach Abnehmen des Gerätes und Drehen um 180° können auch schwarze Tasten vermessen werden, ohne dass die Schiene umgesetzt werden muss.

### Anwendungsbeispiele:

"Key Level": Messung und Dokumentation der Tastenhöhen / Tastentiefgang
"Action Adjust": Messung von Parametern der eingeschobenen Flügel-Mechanik wie Steigung, Auslösung, Abnicken, Fang
"String Level": Messung der Saitenhöhen (Saitenebene)
"Scale Design": Zwei Geräte werden kabellos gekoppelt, um klingende Länge und Anhanglänge zu vermessen; auch der Stegdruck kann berechnet werden

### Vorteile der Erfindung:

Berührungslose, reproduzierbare Messung
Direkte Übertragung und Auswertung der Daten in Echtzeit
Keine Vibrations- oder Tastenfehler durch vollständig externe Steuerung
Mechanisch robust und ohne Befestigung am Instrument einsetzbar
Kompatibel mit verschiedensten Klaviaturtypen durch flexible Justage

### Zeichnungen:

Die Anmeldung enthält keine Zeichnungen. Eine schematische Darstellung kann nachgereicht werden, ist jedoch für die Offenbarung der technischen Lehre nicht erforderlich.

### Hinweis:

Diese Beschreibung enthält keine zusätzlichen technischen Merkmale, die über die bereits eingereichte Anmeldung vom 11.04.2025 hinausgehen.

## Patentansprüche

1. **Messvorrichtung zur berührungslosen Erfassung von Höhen- und Positionswerten an Tasteninstrumenten, insbesondere Klavieren und Flügeln, umfassend:**
- einen linear verschiebbaren Messkopf entlang einer Führungsschiene,
- einen Laserdistanzsensor zur Höhenmessung,
- einen Längen-Encoder zur Erfassung der horizontalen Position,
- ein integriertes Display zur Echtzeit-Anzeige der Messdaten,
- ein Mikrocontroller-Modul mit WLAN-Funktionalität zur Datenübertragung an externe Geräte,
- eine Software zur Steuerung und Anzeige der Daten am Gerät sowie zur Visualisierung der Daten in Echtzeit auf einem verbundenen PC (Excel via VBA-Makro).

2. **Vorrichtung nach Anspruch 1, dadurch gekennzeichnet, dass die Bedienung ausschließlich über eine Infrarot-Fernbedienung erfolgt, um Messfehler durch Berührung zu verhindern.**

3. **Vorrichtung nach einem der vorangehenden Ansprüche, wobei die Höhenmessung durch einen Präzisions-Laser im µm-Bereich der Klasse 2 erfolgt.**

4. **Vorrichtung nach einem der vorangehenden Ansprüche, bei der alle Komponenten in ein modulares Profilgehäuse integriert sind.**

5. **Vorrichtung nach einem der vorangehenden Ansprüche, wobei Messdaten lokal gespeichert und/oder über WLAN abgerufen oder live an ein externes System übertragen werden.**

6. **Zwei baugleiche Vorrichtungen, die sich gegenseitig über WLAN synchronisieren, um durch Encoder-Daten den Abstand beider Einheiten entlang einer mechanischen Führungsschiene (Systemprofil) zu ermitteln. Das aufgeklebte inkrementell codierte Magnetband dient der Positionsreferenzierung. Dadurch kann die Länge einer zu messenden Saite (z.B. klingende Länge oder Anhanglänge) bestimmt werden.**
**In Kombination mit dem Laser-Distanz-Sensor kann zudem der Stegdruck präzise gemessen werden.**

7. **Vorrichtung nach einem der vorangehenden Ansprüche, dadurch gekennzeichnet, dass sie auf der Führungsschiene um 180° gedreht aufgesetzt werden kann, wodurch ein Wechsel zwischen Messung weißer und schwarzer Tasten möglich ist, ohne dass die Führungsschiene umgebaut oder versetzt werden muss.**

8. **Vorrichtung nach einem der vorangehenden Ansprüche,**
**dadurch gekennzeichnet, dass der Laserdistanzsensor sowohl horizontal (quer zur Führungsschiene) als auch vertikal (senkrecht zur Klaviatur) justierbar gelagert ist,**
**wobei die vertikale Verstellung über einen mit Neodym-Magneten fixierten Arm erfolgt und der Laser in der Höhe so justiert werden kann, dass der Sweet Spot (Focus) exakt auf Höhe der Tasten liegt. Die horizontale Feinausrichtung ermöglicht eine Anpassung an verschiedene Tasten-Geometrien, z. B. bei sehr alten Instrumenten mit kürzeren Tasten.**
